# EUROPEAN PATENT APPLICATION

(11) **EP 3 564 814 A1**
(43) Date of publication of application: **06.11.2019**
(21) Application number: 17886706.5
(22) Date of filing: 27.04.2017
(51) Int. Cl.: G06F 9/445

(54) **METHOD AND DEVICE FOR STARTING AND OPERATING SYSTEM, AND COMPUTER STORAGE MEDIUM**

(30) Priority: 28.12.2016 CN 201611244019
(71) Applicant: Sanechips Technology Co., Ltd., Shenzhen, Guangdong 518055 (CN)
(72) Inventor: WU, Honglei, Shenzhen Guangdong 51805 (CN)
(74) Representative: D'Halleweyn, Nele Veerle Trees Gertrudis
(86) International application number: PCT/CN2017/082283
(87) International publication number: WO 2018/120548

(57) **Abstract**

Discloses in the present invention is a method and device for starting and running a system and a computer storage medium. The method includes the following steps: partitioning a storage device into a plurality of storage areas, and partitioning a system code into a plurality of segment codes; storing a plurality of segment codes into corresponding storage areas in the storage device; and copying the segment codes stored in the storage areas of the storage device to a memory for running when starting or running the system.

## Description

### Cross Reference to Related Applications

This application is based on a Chinese patent application No.201611244019.6, filed on December 28, 2016, and claims the priority of the Chinese patent application, the entire content of which are hereby incorporated by reference.

### Technical Field

The present invention relates to a technology of starting and running a system of a communication terminal, in particular to a method and apparatus for starting and running the system, and a computer storage medium.

### Background

Some embedded chips have small and weird distributed address spaces. An address space of tens of K or hundreds of K may include high-speed on-chip Random Access Memory (RAM) and low-speed off-chip RAM. There may also be a plurality of discrete RAM areas. For example, some embedded chips have a plurality of discrete address spaces of tens of K or hundreds of K. Each address space includes high-speed on-chip RAM and low-speed off-chip RAM.

Faced to this weird distributed and small memory address space, traditional systems cannot be loaded into the memory to run. It is because generally the address loaded and the address run by the traditional system are continuous, and the size of the code is greater than the memory capacity. Based on this, how to squeeze the operation system into memory with smaller capacity and discontinuous addresses is a problem to be solved.

### Summary of the Invention

To solve the above mentioned technical problem, an embodiment of the present invention provides a method and apparatus for starting and running a system, and a computer storage medium.

The method for starting and running the system provided by an embodiment of the present invention includes:
partitioning a storage device into a plurality of storage areas, and partitioning a system code into a plurality of segment codes;
storing a plurality of segment codes into corresponding storage areas in the storage device; and
copying the segment codes stored in the storage areas of the storage device to a memory for running when starting or running the system.

In an embodiment of the present invention, partitioning the storage device into a plurality of storage areas and partitioning the system code into a plurality of segment codes includes:
partitioning the storage device into the following storage areas: a primary starting area, a general area, an abnormal interrupt processing area, a secondary starting area, a scheduling and running area, a high-speed running area and a functional area;
partitioning the system code into following segment codes: a primary starting segment code, a general segment code, an abnormal interrupt processing segment code, a secondary starting segment code, a scheduling and running segment code, a high-speed running segment code and a functional segment code.

In an embodiment of the present invention, partitioning the system code into a plurality of segment codes, further includes:
partitioning the functional segment code into a plurality of sub-segment codes according to functions, herein each sub-segment code corresponds to a function.

In an embodiment of the present invention, the method further includes:
setting corresponding priorities for various sub-segment codes according to a usage frequency and/or usage time index of the sub-segment codes.

In an embodiment of the present invention, the sub-segment codes in the functional segment code satisfy at least one of the following:
using local variables in the sub-segment code;
storing a constant in the sub-segment codes, along with the sub-segment codes entering into and exiting from the memory;
no reference relationship between different sub-segment codes;
a total capacity of sub-segment codes determined by the reference relationship between the sub-segment codes being less than or equal to an idle memory capacity; and
addressing of reference functions between different sub-segment codes being indirectly addressed by means of a function pointer array hook, herein the function pointer array hook is stored in the general segment code, and the pointer array hook is managed by the scheduling and running segment code.

In an embodiment of the present invention, various segment codes and sub-segment codes are stored in a page alignment manner when a plurality of segment codes are stored to the corresponding storage areas in the storage device.

In an embodiment of the invention, copying the segment codes stored in the storage areas of the storage device to a memory for running when starting or running the system, includes:
copying the primary starting segment code into a built-in memory;
running the primary starting segment code, initializing an external memory, and copying the secondary starting segment code into an external memory;
running the secondary starting segment code, and copying the following segment codes into the built-in memory respectively: the general segment code, the abnormal interrupt processing segment code, the scheduling and running segment code, and the high-speed running segment code; and
running the general segment code to initialize the system and completing the starting of the system.

In an embodiment of present invention, copying the segment codes stored in the storage areas of the storage device to a memory for running when starting or running the system, includes:
running the scheduling and running segment code, according to a predetermined strategy, scheduling the sub-segment code in the functional segment code to the memory for running after starting the system.

In an embodiment of the present invention, the method further includes:
loading the sub-segment codes with a priority higher than a first threshold value into the memory when starting the system, and
loading the sub-segment codes to be called into the memory when running the system.

In an embodiment of the present invention, scheduling the sub-segment codes in the functional segment codes to the memory according to a predetermined strategy, includes:
determining whether there are any sub-segment codes required to be loaded into the memory;
determining whether the sub-segment codes have been loaded into the memory if there are sub-segment codes required to be loaded into the memory;
allocating a memory space for the sub-segment codes if the sub-segment codes are not loaded into memory;
triggering a virtual memory area functional function to release a memory occupied by sub-segment codes with a priority lower than that of the sub-segment codes if the memory space is insufficient;
establishing an address mapping table in a memory management unit when allocating the memory space successfully for the sub-segment codes;
determining whether any sub-segment codes are stored in the virtual memory area;
loading the sub-segment codes from the virtual memory area and clearing the sub-segment codes stored in the virtual memory area if the sub-segment codes are stored in the virtual memory area, loading the sub-segment codes from the functional segment if the sub-segment codes are not stored in the virtual memory area;
adding the function hook into the function pointer array of the general segment code;
marking a sub-segment code called by the sub-segment codes as a sub-segment code required to be loaded into the memory; and
marking the sub-segment code as loaded.

In an embodiment of the present invention, scheduling the sub-segment codes in the functional segment code to the memory according to a predetermined strategy, includes:
determining whether there are any sub-segment codes required to be loaded into the memory;
determining whether the sub-segment codes have been loaded into the memory if there are sub-segment codes required to be loaded into the memory;
allocating a memory space for the sub-segment codes if the sub-segment codes have not been loaded into the memory;
triggering the virtual memory area functional function to release the memory occupied by the sub-segment codes with a priority lower than that of the sub-segment codes if the memory space is insufficient;
determining whether any sub-segment codes are stored in the virtual memory area when allocating the memory space for the sub-segment codes successfully;
loading the sub-segment code from the virtual memory area and clearing the sub-segment code stored in the virtual memory area if the sub-segment codes are stored in the virtual memory area; loading the sub-segment codes from the functional segment if the sub-segment codes are not stored in the virtual memory area;
relocating the sub-segment codes to the memory;
adding the function hook into the function pointer array of the general segment codes;
marking a sub-segment code called by the sub-segment codes as a sub-segment code required to be loaded into the memory; and
marking the sub-segment code as loaded.

In an embodiment of the present invention, the method further includes:
determining whether there are any sub-segment codes required to be exported from the memory;
determining whether the sub-segment codes have been loaded into the memory if there are sub-segment codes required to be exported from the memory;
clearing the memory space corresponding to the sub-segment codes if the sub-segment codes have been loaded into the memory;
deleting the address mapping table in the memory management unit;
deleting corresponding function hook in the function pointer array of the general segment code; and
marking the sub-segment codes as deleted.

In an embodiment of the present invention, the method further includes:
determining whether there are any sub-segment codes required to be exported from the memory;
determining whether the sub-segment code have been loaded into the memory if there are sub-segment codes required to be exported from the memory;
clearing the memory space corresponding to the sub-segment codes if the sub-segment codes have been loaded into the memory;
deleting the corresponding function hook in the function pointer array of the general segment code; and
marking the sub-segment codes as deleted.

In an embodiment of the present invention, the method further includes:
clearing the data in the virtual memory area when starting the system;
storing the sub-segment codes with a priority lower than a second threshold value into the virtual memory area and releasing corresponding memory space under the condition of insufficient memory; clearing the memory space and deleting the address mapping table in the memory management unit or clearing the memory space; deleting the corresponding function hook in the function pointer array of the general segment code; marking usage information of the virtual memory area; and marking the sub-segment codes as exported; and
determining whether there are any sub-segment codes in the virtual memory area required to be loaded under the condition of sufficient memory; if there are sub-segment codes required to be loaded, determining whether the sub-segment codes have been loaded into the memory; if the sub-segment codes are not loaded into the memory, establishing the address mapping table in the memory management unit and allocating the memory space and loading the sub-segment codes into the memory, or allocating the memory space and loading the sub-segment codes into the memory by a relocation manner; adding the corresponding function hook into the function pointer array of the general segment code; clearing the sub-segment codes in the virtual memory area and the usage information of the virtual memory area; and marking the sub-segment codes as loaded.

An apparatus for starting and running a system provided by an embodiment of the present invention, includes:
a partitioning unit, configured to partition a storage device into a plurality of storage areas and partition a system code into a plurality of segment codes;
a storage unit, configured to store a plurality of segment codes into the corresponding storage areas in the storage device; and
a processing unit, configured to copy the segment codes stored in the storage areas of the storage device to a memory for running when starting or running the system.

In an embodiment of the present invention, the partitioning unit is further configured to partition the storage device into the following storage areas: a primary starting area, a general area, an abnormal interrupt processing area, a secondary starting area, a scheduling and running area, a high-speed running area and a functional area; and
partition the system code into the following segments: a primary starting segment code, a general segment code, an abnormal interrupt processing segment code, a secondary starting segment code, a scheduling and running segment code, a high-speed running segment code and a functional segment code.

In an embodiment of the present invention, the partitioning unit is further configured to partition the functional segment code into a plurality of sub-segment codes according to functions, herein each sub-segment code corresponds to a function.

In an embodiment of the present invention, the apparatus further includes:
a setting unit, configured to set corresponding priorities for various sub-segment codes according to a usage frequency and/or usage time index of the sub-segment codes.

In an embodiment of the present invention, the sub-segment codes in the functional segment code satisfy at least one of the following:
using local variables in the sub-segment codes;
storing a constant in the sub-segment codes, along with the sub-segment codes entering into and exiting from the memory;
no reference relationship between different sub-segment codes;
a total capacity of sub-segment codes determined by the reference relationship between the sub-segment codes being less than or equal to an idle memory capacity; and
addressing of reference functions between different sub-segment codes being indirectly addressed by means of a function pointer array hook, herein the function pointer array hook is stored in the general segment code, and the pointer array hook is managed by the scheduling and running segment code.

In an embodiment of the present invention, when a plurality of segment codes are stored to the corresponding storage areas in the storage device, various segment code and sub-segment codes are stored in a page alignment manner.

In an embodiment of the present invention, the processing unit is further configured to copy the primary starting segment code into a built-in memory; run the primary starting segment code, initialize an external memory, and copy the secondary starting segment code into the external memory; run the secondary starting segment code, copy the following segment codes into the built-in memory respectively: the general segment code, the abnormal interrupt processing segment code, the scheduling and running segment code, and the high-speed running segment code; and run the general segment code to initialize the system and complete the starting of the system.

In an embodiment of the present invention, the processing unit is further configured to run the scheduling and running segment code after starting the system, and schedule the sub-segment codes in the functional segment code to run in the memory according to a predetermined strategy.

In an embodiment of the present invention, the processing unit is further configured to load sub-segment codes with a priority higher than the first threshold value into the memory when starting the system; and load the sub-segment codes to be called into the memory when running the system.

In an embodiment of the invention, the processing unit includes a first loading sub-unit, configured to execute the following procedures:
determining whether there are any sub-segment codes required to be loaded into the memory;
determining whether the sub-segment codes have been loaded into the memory if there are sub-segment codes required to be loaded into the memory;
allocating the memory space for the sub-segment codes if the sub-segment codes have not been loaded into memory;
triggering a virtual memory area functional function to release a memory occupied by sub-segment codes with a priority lower than that of the sub-segment codes if the memory space is insufficient;
establishing the address mapping table in a memory management unit when allocating the memory space for the sub-segment codes successfully;
determining whether any sub-segment codes are stored in the virtual memory area;
loading the sub-segment codes from the virtual memory area and clear the sub-segment code stored in the virtual memory area if the sub-segment codes are stored in the virtual memory area; loading the sub-segment codes from the functional segment code if the sub-segment codes are not stored in the virtual memory area;
adding the function hook into the function pointer array of the general segment code;
marking a sub-segment code called by the sub-segment codes as a sub-segment code required to be loaded into the memory; and
marking the sub-segment code as loaded.

In an embodiment of the present invention, the processing unit includes a second loading sub-unit, configured to execute the following procedures:
determining whether there are any sub-segment codes required to be loaded into the memory;
determining whether the sub-segment codes have been loaded into the memory if there are sub-segment codes required to be loaded into the memory;
allocating the memory space for the sub-segment codes if the sub-segment codes are not loaded into memory;
trigger the virtual memory area functional function to release the memory occupied by the sub-segment codes with a priority lower than that of the sub-segment codes if the memory space is insufficient;
determining whether any sub-segment codes are stored in the virtual memory area when allocating the memory space for the sub-segment codes successfully;
loading the sub-segment codes from the virtual memory area and clear the sub-segment codes stored in the virtual memory area if the sub-segment codes are stored in the virtual memory area; loading the sub-segment codes from the functional segment if the sub-segment codes are not stored in the virtual memory area;
relocating the sub-segment codes into the memory;
adding the function hook into the function pointer array of the general segment code;
marking a sub-segment code called by the sub-segment codes as a sub-segment code required to be loaded into the memory; and
marking the sub-segment code as loaded.

In an embodiment of the present invention, the processing unit includes a first deleting sub-unit, configured to execute the following procedures:
determining whether there are any sub-segment codes required to be exported from the memory;
determining whether the sub-segment codes have been loaded into the memory if there are sub-segment codes required to be exported from the memory;
clearing the memory space corresponding to the sub-segment codes if the sub-segment codes have been loaded into the memory;
deleting the address mapping table in the memory management unit;
deleting the corresponding function hook in the function pointer array of the general segment code; and
marking the sub-segment codes as deleted.

In an embodiment of the present invention, the processing unit includes a second deleting sub-unit, configured to execute the following procedures:
determining whether there are any sub-segment codes required to be exported from the memory;
determining whether the sub-segment codes have been loaded into the memory if there are sub-segment codes required to be exported from the memory,;
clearing the memory space corresponding to the sub-segment codes if the sub-segment codes have been loaded into the memory;
deleting the corresponding function hook in the function pointer array of the general segment code; and
marking the sub-segment codes as deleted.

In an embodiment of the present invention, the processing unit further includes:
a clearing subunit, configured to clear data of the virtual memory area when starting the system;
an exporting sub-unit, configured to store sub-segment codes with a priority lower than a second threshold value into the virtual memory area and release the corresponding memory space under the condition of insufficient memory; clear the memory space and delete the address mapping table in the memory management unit or clear the memory space; delete the corresponding function hook in the function pointer array of the general segment code; mark the usage information of the virtual memory area; and mark the sub-segment codes as exported; and
a third loading subunit, configured to determine whether there are any sub-segment codes in the virtual memory area required to be loaded under the condition of sufficient memory; determine whether the sub-segment codes have been loaded into the memory if there are sub-segment codes required to be loaded; establish the address mapping table in the memory management unit and allocate the memory space and load the sub-segment codes into the memory if the sub-segment codes are not loaded into the memory, or allocate the memory space and load the sub-segment codes into the memory in a relocation manner; add the corresponding function hook into the function pointer array of the general segment code; clear the sub-segment codes in the virtual memory area and the usage information of the virtual memory area; and mark the sub-segment codes as loaded.

An embodiment of the present invention further provides a computer storage medium, the computer storage medium storing a computer program, herein, the computer program is configured to execute the above method for starting and running the system.

In the technical solution of the embodiment of the present invention, the storage device is partitioned into a plurality of storage areas, and the system code is partitioned into a plurality of segment codes; a plurality of segment codes are stored into the corresponding storage areas in the storage device; the segment codes stored in the storage area of the storage device are copied to the memory for running when starting or running the system. By adopting the technical solution of the embodiment of the present invention, an operating system can be squeezed into a memory with smaller capacity and discontinuous addresses to run. In another aspect, the solution of the embodiment of the present invention can effectively utilize the memory space embedded in the chip to start and run the system, thereby saving the memory capacity and reducing the cost.

### Brief Description of Drawings

The accompanying drawings generally illustrate various embodiments discussed herein by way of example and not limitation.
Fig. 1 is a schematic diagram of partitions in a storage device according to an embodiment of the present invention;
FIG. 2 is a schematic diagram of segmentation of a system according to an embodiment of the present invention;
FIG. 3 is a structural diagram of functional segments according to an embodiment of the present invention;
FIG. 4 is a schematic diagram of code moving of system starting process according to an embodiment of the present invention
FIG. 5 is a schematic diagram of system scheduling and running segment functions according to an embodiment of the present invention;
FIG. 6 is a flowchart of a method for starting and running a system according to the embodiment of the present invention.
Fig. 7 is a flowchart 1 for loading the sub-segment codes into a memory according to an embodiment of the present invention;
Fig. 8 is a flowchart 2 for loading the sub-segment codes into a memory according to an embodiment of the present invention;
Fig. 9 is a flowchart 1 for exporting the sub-segment codes from a memory according to an embodiment of the present invention;
Fig. 10 is a flowchart 2 for exporting the sub-segment codes from a memory according to an embodiment of the present invention;
Fig. 11 is a flow chart for managing a virtual memory area (swap) according to an embodiment of the present invention;
FIG. 12 is a schematic structural diagram of an apparatus for starting and running a system according to an embodiment of the present invention.

### Detailed Description

In order to understand the characteristics and technical contents of the embodiments of the present invention in more detail, the implementation of the embodiments of the present invention will be described in detail below with reference to the attached drawings, which are for reference only and are not intended to limit the embodiments of the present invention.

In order to squeeze the operating system into the memory with smaller capacity and discontinuous addresses for running, the embodiment of the present invention provides a solution for booting the system from the storage device to start running in segments. The technical solution of the embodiment of the present invention indicates a large quantity of details of a linked program on a memory layout through a linker, allocates specific types of codes and data, and partitions the codes into different segments according to functions. When the system is started and run, the corresponding segments are loaded into the memory to run according to the used functions, and without loading unused functions. According to the technical solution of the embodiment of the present invention, the operating system is run in a memory address space with weird distribution and small size.

According to the technical solution of the embodiment of the present invention, booting the system from the storage device to start running in segments includes the following contents.

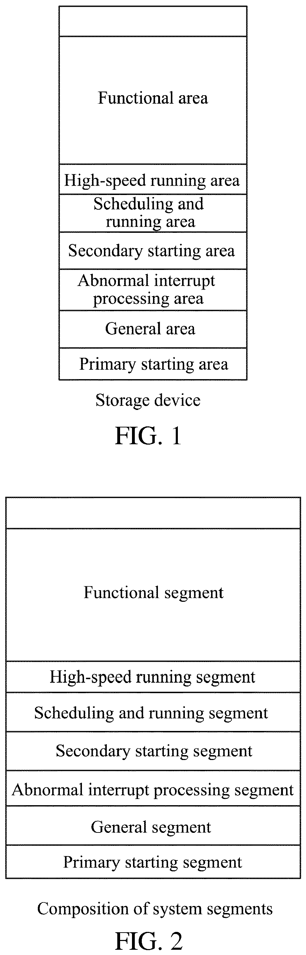

Step 1: as shown in FIG. 1, the storage device is partitioned into several storage areas (as shown in FIG. 1, partitioning the storage device into seven storage areas: a primary starting area, a general area, an abnormal interrupt processing area, a secondary starting area, a scheduling and running area, a high-speed running area and a functional area) for storing the corresponding segments of the system codes. Herein, various storage areas are in the page alignment.

Step 2: as shown in FIG. 2, the system codes are partitioned into several segments (as shown in FIG. 2, partitioning the system codes into seven large segments: a primary starting segment, a general segment, an abnormal interrupt processing segment, a scheduling and running segment, a high-speed running segment and a functional segment). Herein, the system code is generally modular, the system is partitioned into different modules according to different functions of the system code, such as, booting system starting module, abnormal interrupt processing module, memory managing module, network communicating module. These modules with different functions are put into the corresponding segments through the linker.

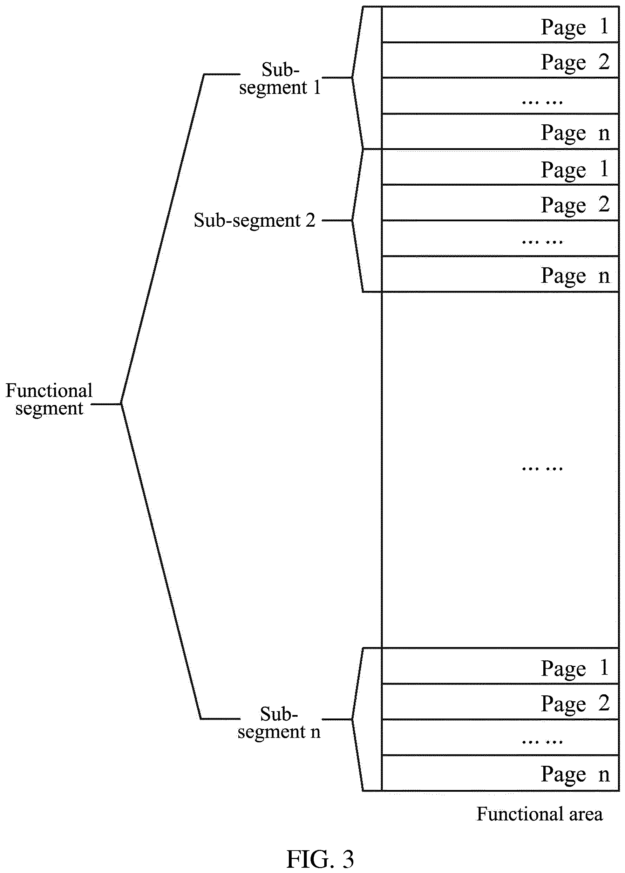

Step 3: there are some codes in the system, which are relatively independent in function and will be called from time to time when the system is running, for example, various peripheral driver modules, and different file system modules, etc. This part of the codes (which accounts for a large proportion in the system) are partitioned into several segments according to functions through the linker. All these segments are placed in the functional segment, as shown in FIG.3. Each function corresponds to a sub-segment, and n functions correspond to n sub-segments. Various sub-segments are in the page alignment. Since various sub-segments are relatively independent, it is not necessary to load them into memory to run at the same time. The sub-segments are scheduled in memory for running according to certain rules, thus saving the memory space.

Step 4: different segments of the system partitioned in Step 2 and Step 3 are stored in the corresponding storage areas of the storage device (the segments correspond to the storage areas one by one). At this time, the link address of the system code is different from the storage address. The storage addresses of various segments are calculated through the link address of the code when the system is run.

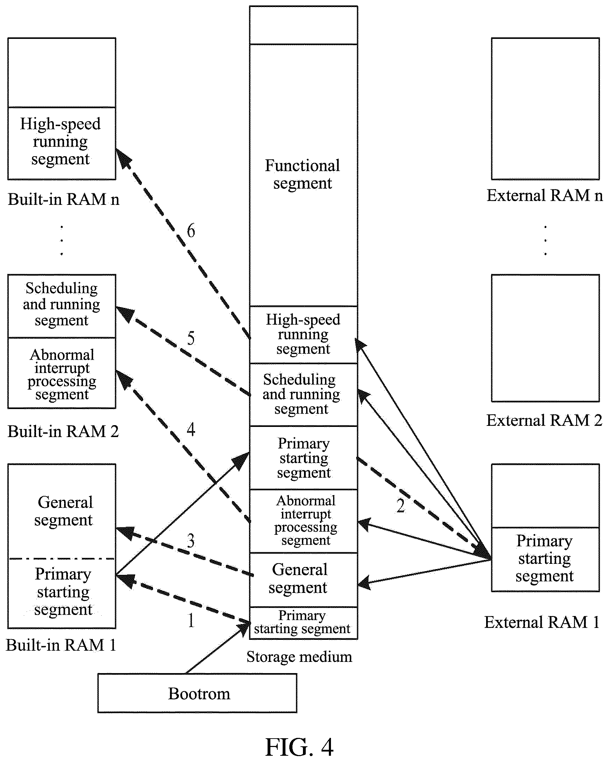

Step 5: powering on, the system will copy the corresponding segment to the memory for running as shown in FIG. 4. A brief introduction to the starting process is as follows.
1. Many embedded chips have bootroms with firmware. The bootroms will copy the primary starting segment to a built-in RAM for running after starting.
2. The primary starting segment code is run. The function of the primary starting segment is to initialize the external RAM and copy the secondary starting segment to the external RAM for running.
3. The secondary starting segment code is run. The main function of the code in the secondary starting segment is to copy the segments partitioned in the first step to the memory (except for the functional segments) for running. Finally, the starting process is completed. At this time, the loading addresses and the running addresses of various segment codes copied to the memory for running are the same.
4. After the secondary starting segment code is run, it is to jump to the general segment of the memory to start initializing and running the system.

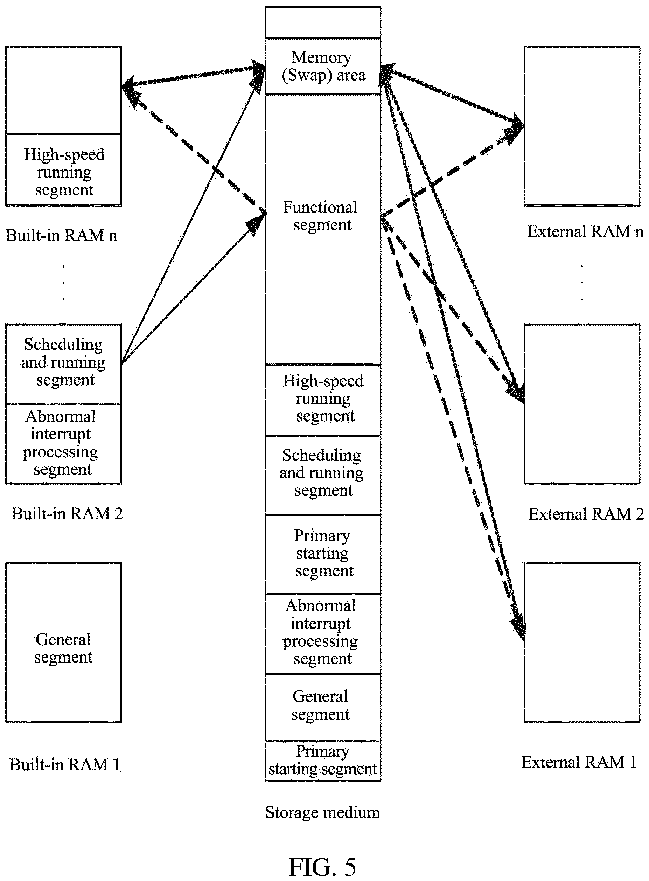

Step 6: after the system is run, the code in the scheduling and running segment will schedule the sub-segments in the functional segment to run in the memory according to the certain rules, as shown in FIG. 5.

Step 7: a virtual memory area (Swap) is partitioned in the storage medium (i.e. storage device). When the memory is full and there is a need to continue allocating the memory, the swap area is started. The scheduling and running segment uses the swap area according to certain rules, as shown in FIG. 5.

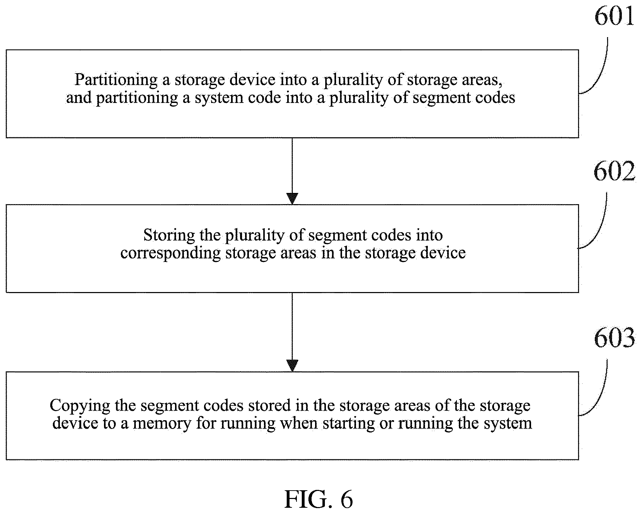

FIG. 6 is a flow chart of the method for starting and running the system in accordance with an embodiment of the present invention, and as shown in FIG. 6, the method for starting and running the system includes the following steps.

Step 601: the storage device is partitioned into a plurality of storage areas and the system code is partitioned into a plurality of segment codes.

In an embodiment of the present invention, partitioning the storage device into a plurality of storage areas and partitioning the system code into a plurality of segment codes includes:
partitioning the storage device into the following storage areas: a primary starting area, a general area, an abnormal interrupt processing area, a secondary starting area, a scheduling and running area, a high-speed running area and a functional area;
partitioning the system code into the following segment codes: a primary starting segment code, a general segment code, an abnormal interrupt processing segment code, a secondary starting segment code, a scheduling and running segment code, a high-speed running segment code and a functional segment code.

Further, partitioning the system code into a plurality of segment codes further includes:
partitioning the functional segment code into a plurality of sub-segment codes according to the functions, herein each sub-segment code corresponds to a function.

In an embodiment of the present invention, corresponding priorities are set for various sub-segment codes according to a usage frequency and/or usage time index of the sub-segment codes.

In an embodiment of the present invention, the sub-segment codes in the functional segment code satisfy at least one of the following:
using local variables in the sub-segment code;
storing a constant in the sub-segment codes, along with the sub-segment codes entering into and exiting from the memory;
no reference relationship between different sub-segment codes;
a total capacity of sub-segment codes determined by the reference relationship between the sub-segment codes being less than or equal to an idle memory capacity; and
addressing of reference functions between different sub-segment codes being indirectly addressed by means of a function pointer array hook, herein the function pointer array hook is stored in the general segment code, and the pointer array hook is managed by the scheduling and running segment code.

Step 602: a plurality of segment codes are stored into corresponding storage areas in the storage device.

In an embodiment of the present invention, various segment codes and sub-segment codes are stored in the page alignment manner when a plurality of segment codes are stored into corresponding storage areas in the storage device.

Step 603: the segment codes stored in the storage areas of the storage device are copied to the memory for running when starting or running the system.

In an embodiment of the present invention, copying the segment codes stored in the storage areas of the storage device to the memory for running when starting the system, includes:
copying the primary starting segment code into the built-in memory;
running the primary starting segment code, initializing the external memory, and copying the secondary starting segment code into the external memory;
running the secondary starting segment code, and copying the following segment codes into the built-in memory respectively: the general segment code, the abnormal interrupt processing segment code, scheduling and running segment code, and high-speed running segment code;
running the general segment code to initialize the system and complete starting the system.

In an embodiment of the present invention, copying the segment codes stored in the storage areas of the storage device to the memory for running when running the system, includes:
running the scheduling and running segment code after starting the system, and scheduling the sub-segment code in the functional segment code to the memory for running according to the predetermined strategy.

In addition, the sub-segment codes with a priority higher than the first threshold value are loaded into the memory when starting the system, and the sub-segment codes to be called are loaded into the memory when running the system.

In first embodiment of the present invention, the process of loading the sub-segment codes into the memory includes: determining whether there are any sub-segment codes required to be loaded into the memory; determining whether the sub-segment codes have been loaded into the memory if there are sub-segment codes required to be loaded into the memory; allocating the memory space for the sub-segment codes if the sub-segment codes have not been loaded into memory; triggering the virtual memory area functional function to release the memory occupied by the sub-segment codes with a priority lower than that of the sub-segment codes if the memory space is insufficient; establishing an address mapping table in a memory management unit when allocating the memory space successfully for the sub-segment codes; determining whether any sub-segment codes are stored in the virtual memory area; loading the sub-segment codes from the virtual memory area and clearing the sub-segment codes stored in the virtual memory area if the sub-segment codes are stored in the virtual memory area; loading the sub-segment codes from the functional segment if the sub-segment codes are not stored in the virtual memory area; adding the function hook into a function pointer array of the general segment code; marking a sub-segment code called by the sub-segment codes as the sub-segment code required to be loaded into the memory; and marking the sub-segment code as loaded.

In second embodiment of the present invention, the process of loading the sub-segment codes into the memory includes: determining whether there are any sub-segment codes required to be loaded into the memory; determining whether the sub-segment codes have been loaded into the memory if there are sub-segment codes required to be loaded into the memory; allocating the memory space for the sub-segment codes if the sub-segment codes have been loaded into memory; triggering the virtual memory area functional function to release the memory occupied by the sub-segment codes with a priority lower than that of the sub-segment codes if the memory space is insufficient; determining whether any sub-segment codes are stored in the virtual memory area when allocating the memory space successfully for the sub-segment codes; loading the sub-segment codes from the virtual memory area and clearing the sub-segment codes stored in the virtual memory area if the sub-segment codes are stored in the virtual memory area; loading the sub-segment codes from the functional segment if the sub-segment codes are not stored in the virtual memory area; relocating the sub-segment codes to the memory; adding the function hook into the function pointer array of the general segment code; marking a sub-segment code called by the sub-segment codes as the sub-segment code required to be loaded into the memory; and marking the sub-segment code as loaded.

In the first embodiment of the present invention, the process of deleting the sub-segment codes from the memory includes: determining whether there are any sub-segment codes required to be exported from the memory; determining whether the sub-segment codes have been loaded into the memory if there are sub-segment codes that need to be exported from the memory; clearing the memory space corresponding to the sub-segment codes if the sub-segment codes have been loaded into the memory; deleting the address mapping table in the memory management unit; deleting the corresponding function hook in the function pointer array of the general segment code; and marking the sub-segment codes as deleted.

In the second embodiment of the present invention, the process of deleting the sub-segment codes from the memory includes: determining whether there are any sub-segment codes required to be exported from the memory; determining whether the sub-segment codes have been loaded into the memory if there are sub-segment codes required to be exported from the memory; clearing the memory space corresponding to the sub-segment codes if the sub-segment codes have been loaded into the memory; deleting the corresponding function hook in the function pointer array of the general segment code; and marking the sub-segment code as deleted.

In an embodiment of the invention, the storage device is provided with a virtual memory area (swap), and the processing flow of the virtual memory area includes the following steps: clearing data of the virtual memory area when starting the system; storing the sub-segment codes with a priority lower than a second threshold value into the virtual memory area and releasing corresponding memory space under the condition of insufficient memory; clearing the memory space and deleting the address mapping table in the memory management unit or clearing the memory space; deleting the corresponding function hook in the function pointer array of the general segment code; marking the usage information of the virtual memory area; marking the sub-segment codes as exported; determining whether there are any sub-segment codes required to be loaded in the virtual memory area under the condition of sufficient memory; determining whether the sub-segment codes have been loaded into the memory if there are sub-segment codes required to be loaded; establishing the address mapping table in the memory management unit and allocating the memory space and loading the sub-segment codes into the memory, or allocating the memory space and loading the sub-segment codes into the memory in a relocation manner if the sub-segment codes have not been loaded into the memory; adding corresponding function hook into the function pointer array of the general segment code; clearing the sub-segment codes in the virtual memory area and the usage information of the virtual memory area; and marking the sub-segment codes as loaded.

The solution of the embodiment of the present invention will be further described in conjunction with specific application examples.

In an embodiment of the present invention, since the page alignment is required for reading and writing operations to the storage device, page alignment is required for operations to the storage device in the codes of the primary starting segment, the secondary starting segment and the scheduling and running segment. In order to reduce the time consumed by the page alignment operation, the starting addresses of all segments are required to be stored in page alignment. Various sub-segments in the functional segment are also stored in page alignment.

As shown in FIG. 3, the functional segment is partitioned into n sub-segments according to the functions of the code, and each sub-segment occupies n pages to ensure page alignment between the sub-segments. The sub-segments are prioritized according to the used frequency level and the strict level of time requirements. The more frequently used or the stricter the time requirement is, the higher the priority is and vice versa. For example, in a uboot command mode, the system will frequently acquire and output information through serial ports, so the priority of sub-segments corresponding to the serial port drive functions is higher than that of sub-segments corresponding to other peripheral drive functions.

In an embodiment of the present invention, the following factors need to be considered when partitioning various sub-segments in the functional segment:
1. Local variables are used as much as possible, that is, the variables are put on the stack as much as possible to reduce the difficulty of relocation.
2. Global variables are stored in the general segment. The general segment is resident in memory, so it can be addressed in a fixed location (the loading address of the general segment in memory is the same as the running address).
3. The constants are stored in various sub-segments, entering into and exiting from the memory along with the sub-segments. The addressing of the constants is determined by relocation.
4. The reference relationship between different sub-segments is reduced. Ideally, each sub-segment is independent of each other and there is no reference relationship between sub-segments, that is, reducing the quantity of sub-segments as much as possible, which need to run in the memory at the same time.
5. If mutual reference cannot be avoided, the total size of sub-segments involved in the reference depth should be guaranteed not to be greater than the available memory capacity.
6. The addressing of reference functions between different sub-segments is indirectly addressed by means of function pointer array hooks. The function pointer array hook is stored in the general segment. The pointer array hook is managed by the scheduling and running segment.
7. Each sub-segment has its own stack. The general segment manages stack switching between different sub-segments.

Based on the above solution, the system starting process is shown in FIG. 4.
1. The system power-on chip firmware bootrom starts to run, and copies the primary staring segment code in the storage device into the built-in RAM, and then jumps to the built-in RAM to run the primary starting segment code.
2. The primary starting segment initializes the external RAM and copies the secondary starting segment code into the external RAM, and then jumps to the external RAM to run the secondary starting segment code.
3. The secondary starting segment code copies the general segment code into the built-in RAM. The general segment mainly stores the global variable data, the constant data, the CPU initialization and the abnormal interrupt vector table codes, etc. When the internal RAM is tight, the general segment code can be put into the external RAM. After the system is started, the general segment will overwrite the primary starting segment code in the memory (this segment is no longer used after the system starts). So their running addresses have overlapped. The overlapping interval of the code running address is defined by the overlay of the connection script.
4. The secondary starting segment code copies the abnormal interrupt processing segment code into the built-in RAM. Since the abnormal interrupt processing function is called frequently, the abnormal interrupt processing function is put into one segment and the segment residents in the memory. Many interrupt processing functions have strict requirements for real-time performance, so it is recommended to put them in the built-in RAM.
5. The secondary starting segment code copies the scheduling and running segment code into the built-in RAM. The scheduling and running segment code runs frequently and will directly affect the performance of the system, so it is recommended to put it in the built-in RAM.
6. The secondary starting segment code copies the high-speed running segment code into the built-in RAM. The high-speed running segment stores the codes whose time requirement is strictest, such as the codes related to network data processing. The high-speed running segment has a very strict requirement for time, so it must be placed in the built-in RAM. If conditions permit, the high-speed running segment can be directly locked to run in cache.
7. It is to jump into the general segment code to run. The general segment is used to initialize CPU, configure an enable interrupt and the like, preparing for the operation of the system.
8. It is to jump into the scheduling and running segment code to run. Since then, the system starting process has been successfully completed.

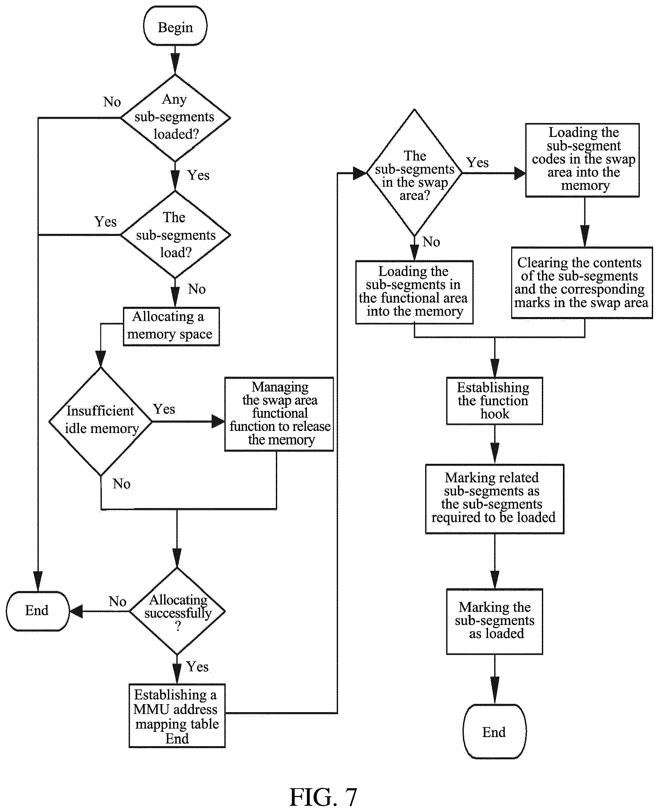

In an embodiment of the invention, the scheduling and running segment code has the following functional characteristics:
1. A function of prefetching the sub-segment of the functional segment.
   1) Sub-segments with a high priority are loaded into the memory first when starting power-on.
   2) The sub-segment to be called is loaded into the memory in advance.
2. A function of scheduling the sub-segments into and out of the memory.
   1) Scheduling process for loading the sub-segments into the memory, (triggering method for scheduling: 1. a timer interrupting the timing trigger; 2. active request for triggering at runtime of corresponding segment code (in this case, the loaded sub-segment has the highest priority)).
      The first method: the memory management unit (MMU) is used to implement mapping from virtual addresses to physical addresses. The virtual addresses of different sub-segments are continuous (i.e. link addresses are continuous) and the physical addresses are discontinuous. As shown in FIG. 7, the following steps are included.
      a) It is determined whether there are any sub-segments required to be loaded into the memory (determining by the loading mark). If there are no sub-segments, exiting without doing anything, otherwise continuing to run. If a plurality of sub-segment need to be loaded, the one with higher priority is loaded first. The sub-segments with same priority are loaded according to an order of the usage time.
      (b) It is determined whether the sub-segment has been loaded into the memory. If yes, then the loading quantity mark is added and an error is reported, and then directly exit, otherwise continuing to run.
      c) The memory space is allocated. Insufficient idle memory leads to the unsuccessful memory allocation. The functional function of managing virtual memory area (swap) is triggered to release the memory occupied by sub-segments with priority lower than that of the sub-segments. If the memory allocation is not successful in the end, it is to exit directly (allocation will be successful after the priority of the sub-segments is increased). If the allocation is successful, it is to continue running.
      d) An address mapping table of memory management unit (MMU) is established.
      e) It is determined whether the virtual memory area (swap) has the code of the sub-segment. If yes, the sub-segment code is loaded from the virtual memory area (swap), otherwise loaded from the functional segment.
      f) If the sub-segment code is loaded from the virtual memory area (swap), the sub-segment code in the virtual memory area (swap) is cleared, and the corresponding mark is cleared.
      g) A new function hook is added to the function pointer array of the general segment for other segments to call.
      h) A sub-segment that will be called by the sub-segment is marked as a sub-segment that needs to be loaded into memory.
      i) The sub-segment code is marked as loaded.

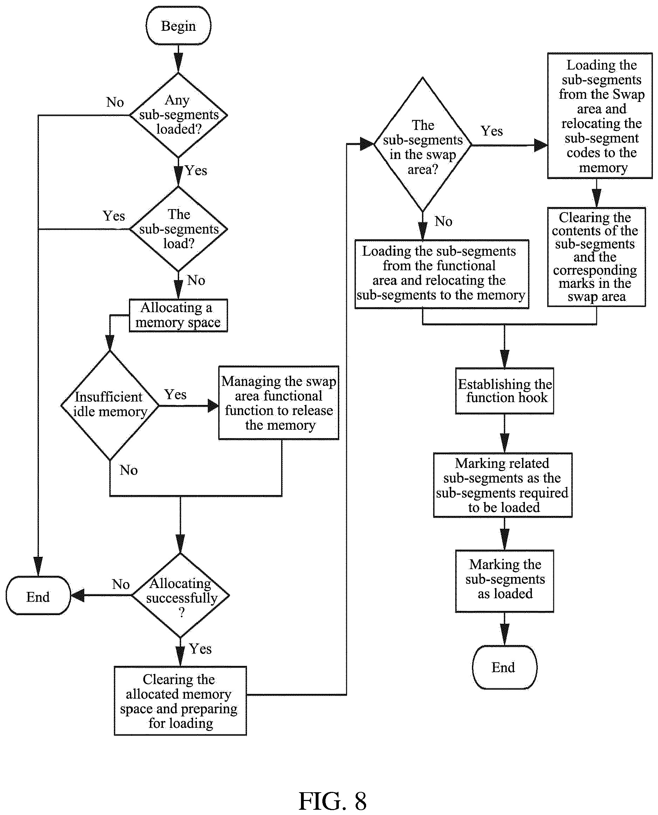

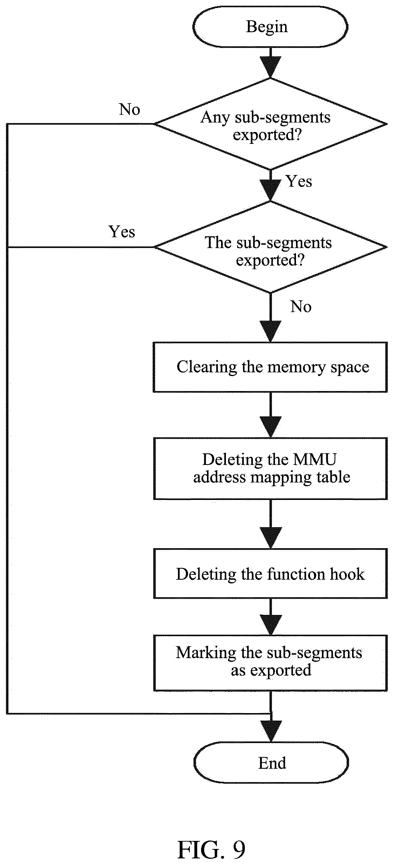

      The second method: the scheduling and running segment code completes the relocation function of the loaded sub-segments without using the memory management unit (MMU). The loading addresses of the sub-segment are different from the running addresses of the sub-segment. The loading addresses of different sub-segments are continuous (i.e. the link addresses are continuous) and the running addresses are discontinuous. As shown in FIG. 8, the following steps are included.
      a) It is determined whether there are any sub-segments required to be loaded into the memory (determining by the loading mark). If there are no sub-segments, it is to exit without doing anything, otherwise continuing to run. If a plurality of sub-segments need to be loaded, the one with higher priority is loaded first. The sub-segments with same priority are loaded according to the order of the usage time.
      b) It is determined whether the sub-segment has been loaded into the memory. If yes, the loading quantity mark is added and an error is reported, and then directly exit, otherwise continuing to run.
      c) The memory space is allocated. Insufficient idle memory leads to the unsuccessful memory allocation. The functional function of managing virtual memory area (swap) is triggered to release the memory occupied by sub-segments with priority lower than that of the sub-segments. If the memory allocation is not successful in the end, it is to exit directly (allocation will be successful after the priority of the sub-segments is increased). If the allocation is successful, it is to continue running.
      d) It is determined whether the virtual memory area(swap) has the code of the sub-segment. If yes, then the sub-segment code is loaded from the virtual memory area (swap), otherwise loaded from the functional segment.
      e) The sub-segment code is loaded and relocated.
      f) If the sub-segment code is loaded from the virtual memory area (swap), the sub-segment code in the virtual memory area (swap) is cleared, and the corresponding mark is cleared.
      g) A new function hook is added to the function pointer array of the general segment for other segments to call.
      h) A sub-segment that will be called by the sub-segment is marked as a sub-segment that needs to be loaded into memory.
      i) The sub-segment code is marked as loaded.
   2) The scheduling process for sub-segment exporting from the memory and releasing the memory: (Timing Interrupt Timing Trigger)
      The first method: a memory management unit (MMU) is used, as shown in FIG. 9, the following steps are included.
      a) It is determined whether there are any sub-segments required to be exported from the memory (determining by the export mark). If there are no sub-segments required to be exported, then it is to exit directly without doing anything, otherwise continuing to run. If a plurality of the sub-segments need to be exported, these segments are exported from the memory together.
      b) It is determined whether the sub-segment has been loaded into the memory. If not, the exporting quantity mark is added and an error is reported, and then directly exit, otherwise continuing to run.
      c) The memory space is cleared.
      d) The address mapping table of memory management unit (MMU) is deleted.
      e) The corresponding function hook in the function pointer array of the general segment is deleted.
      f) The corresponding sub-segment is marked as deleted (i.e. marked as not loading into memory).

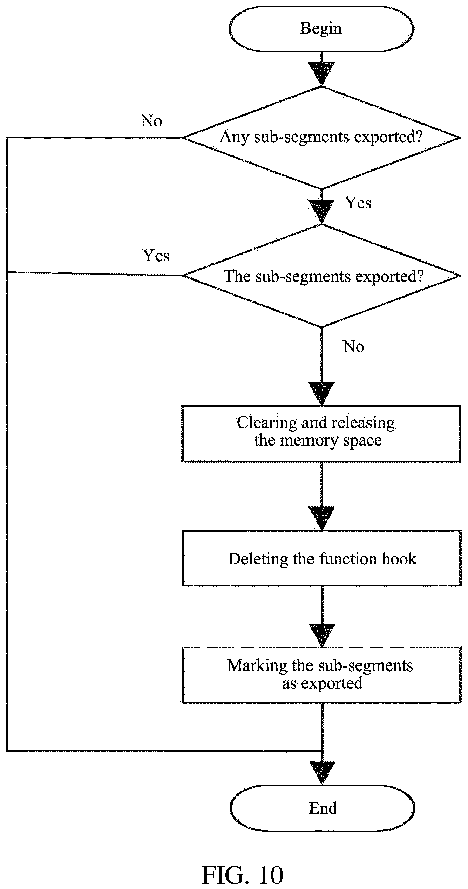

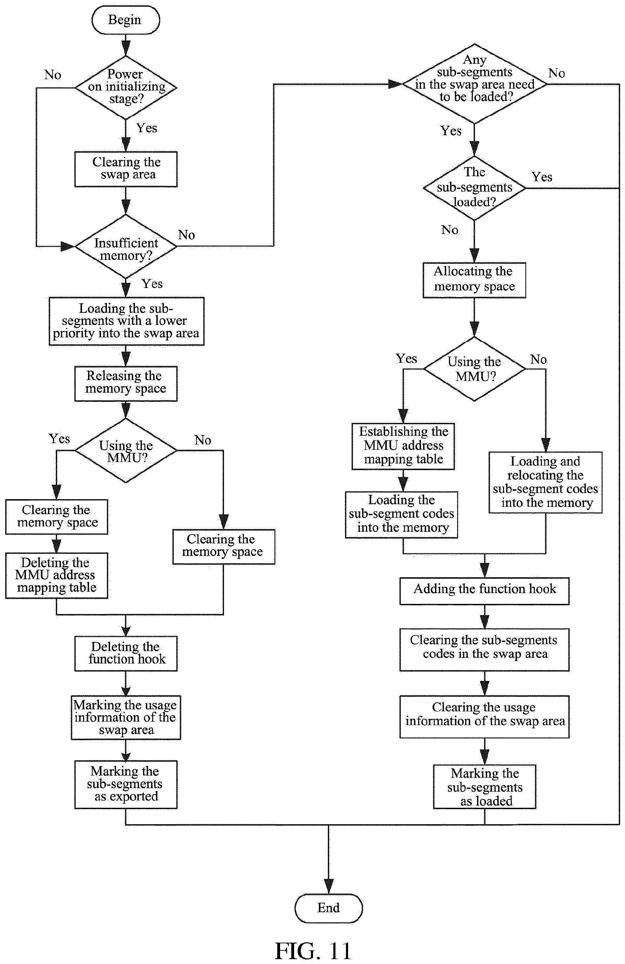

      The second method: without using the memory management unit (MMU), as shown in FIG. 10.
      a) It is determined whether there are any sub-segments required to be exported from the memory (determining by the export mark). If there are no sub-segments required to be exported, then it is to exit directly without doing anything, otherwise continuing to run. If a plurality of the sub-segments need to be exported, these segments are exported from the memory together.
      b) It is determined whether the sub-segment has been loaded into the memory. If not, the exporting quantity mark is added and an error is reported, directly exiting, otherwise continuing to run.
      c) The memory space is released and cleared.
      d) The corresponding function hook is deleted in the function pointer array of the general segment.
      e) The corresponding sub-segment is marked as deleted (i.e. marked as not loading into memory).
3. The scheduling process for managing the virtual memory area (swap), and the triggering method for scheduling includes: 1. The timer interrupting the timing triggering; 2. When the scheduling segment code runs, active request for triggering. The flow for managing the virtual memory area to run is as shown in FIG. 11, includes the following steps.
   1) During an initialization stage of power on to start, the data of virtual memory area (swap) is cleared.
   2) Under the condition of insufficient memory:
      (1) A sub-segment with a priority lower than that of the sub-segment to be loaded is imported into a virtual memory area (swap).
      (2) The stack information of the sub-segments is stored to the virtual memory area (swap) together.
      (3) The memory space is released: using the memory management unit (MMU), firstly clearing the memory space, then deleting the address mapping table of memory management unit (MMU); without using the memory management unit (MMU), clearing the memory space directly.
      (4) The corresponding function hook is deleted in the function pointer array of the general segment.
      (5) The usage information of the corresponding virtual memory area (swap) is marked.
      (6) The corresponding sub-segment is marked as exported.
   3) Under the condition of sufficient idle memory:
      (1) It is determined whether there are any sub-segments in the virtual memory area (swap). If there are no sub-segments, it is to exit without doing anything, otherwise continuing to run. If there is a plurality of sub-segments, the one with higher priority is loaded first. The sub-segments with same priority are loaded according to an order of the usage time.
      (2) It is determined whether the sub-segment has been loaded into the memory. If yes, the loading quantity mark is added and an error is reported, clearing the sub-segment of the virtual memory area (swap), and then directly exit, otherwise continuing to run.
      (3) The memory space is allocated. In the case of using a memory management unit (MMU), firstly an address mapping table of memory management unit (MMU) is established, and then the memory space is allocated; without using the memory management unit (MMU), the memory space is allocated directly.
      (4) The sub-segment code and the information on the stack of the sub-segment code are loaded into the memory: in the case of the memory management unit (MMU), it is to load directly, without using the memory management unit (MMU), it is to load by relocation.
      (5) A new function hook is added to the function pointer array of the general segment.
      (6) The sub-segment code in the virtual memory area (swap) is cleared.
      (7) The usage information of the corresponding virtual memory area (swap) is cleared.
      (8) The sub-segment code is marked as loaded.

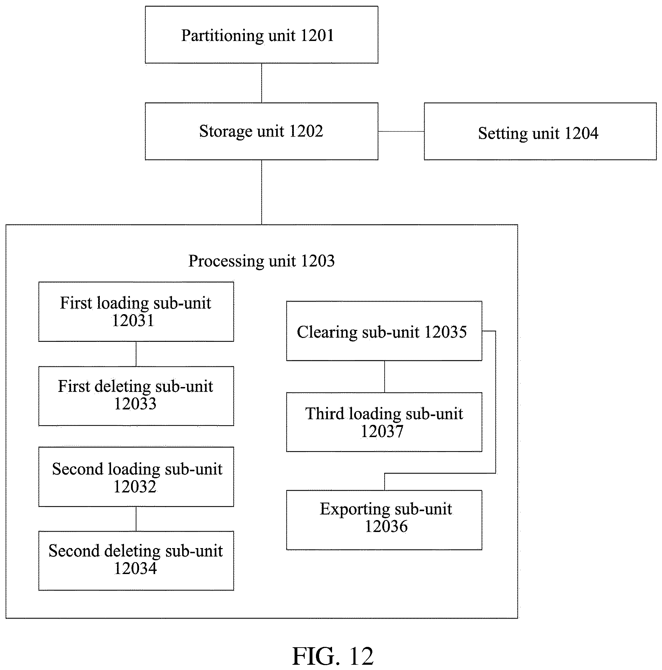

Figure 12 is a schematic structural diagram of an apparatus for starting and running the system according to an embodiment of the present invention; as shown in FIG. 12, the apparatus includes the following units.

A partitioning unit 1201 is configured to partition the storage device into a plurality of storage areas and partition the system code into a plurality of segment codes.

A storage unit 1202 is configured to store a plurality of segment codes into corresponding storage areas in the storage device.

A processing unit 1203 is configured to copy the segment codes stored in the storage area of the storage device to the memory for running when starting or running the system.

In an embodiment of the present invention, the partitioning unit 1201 is further configured to partition the storage device into the following storage areas: a primary starting area, a general area, an abnormal interrupt processing area, a secondary starting area, a scheduling and running area, a high-speed running area and a functional area.

The system code is partitioned into the following segments: a primary starting segment code, a general segment code, an abnormal interrupt processing segment code, a secondary starting segment code, a scheduling and running segment code, a high-speed running segment code and a functional segment code.

In an embodiment of the present invention, the partitioning unit 1201 is further configured to partition the functional segment code into a plurality of sub-segment codes according to functions, herein each sub-segment code corresponds to a function.

In an embodiment of the present invention, the apparatus further includes:
a setting unit 1204, configured to set corresponding priorities for various sub-segment codes according to a usage frequency and/or usage time index of the sub-segment code.

In an embodiment of the present invention, the sub-segment codes in the functional segment code satisfy at least one of the following:
using local variables in the sub-segment codes;
storing the constants in the sub-segment codes, along with the sub-segment codes entering into and exiting from the memory;
no reference relationships between different sub-segment codes;
a total capacity of the sub-segment codes determined by the reference relationships between the sub-segment codes being less than or equal to idle memory capacity;
addressing of reference functions between different sub-segment codes being indirectly addressed by means of a function pointer array hook, herein the function pointer array hook is stored in the general segment code, and the pointer array hook is managed by the scheduling and running segment code.

In an embodiment of the present invention, when storing a plurality of segment code codes to corresponding storage areas in the storage device, various segment codes and sub-segment codes are stored in a page alignment manner.

In an embodiment of the present invention, the processing unit 1203 is further configured to copy the primary starting segment code into the internal memory; run the primary starting segment code, initialize the external memory, and copy the secondary starting segment code into the external memory; run the secondary starting segment code, and copy the following segment codes into the built-in memory respectively: the general segment code, the abnormal interrupt processing segment code, the scheduling and running segment code, and the high-speed running segment code; run the general segment code to initialize the system and complete starting the system.

In an embodiment of the present invention, the processing unit 1203 is further configured to run the scheduling and running segment code after starting the system, and schedule the sub-segment code in the functional segment code to run in the memory according to a predetermined strategy.

In an embodiment of the present invention, the processing unit 1203 is further configured to load sub-segment codes with a priority higher than the first threshold value into the memory when starting the system; load sub-segment codes to be called into the memory when running the system.

In an embodiment of the present invention, the processing unit 1203 includes a first loading sub-unit 12031, configured to execute the following procedures:
determining whether there are any sub-segment codes required to be loaded into the memory;
determining whether the sub-segment codes have been loaded into the memory if there are sub-segment codes required to be loaded into the memory,
allocating the memory space for the sub-segment codes if the sub-segment codes are not loaded into the memory,
triggering a virtual memory area functional function to release a memory occupied by sub-segment codes with a priority lower than that of the sub-segment codes if the memory space is insufficient;
establishing an address mapping table in a memory management unit when allocating the memory space for the sub-segment codes successfully;
determining whether any sub-segment codes are stored in the virtual memory area;
loading the sub-segment codes from the virtual memory area and clearing the sub-segment code stored in the virtual memory area if the sub-segment codes are stored in the virtual memory area; loading the sub-segment codes from the functional segment if the sub-segment codes are not stored in the virtual memory area;
adding a function hook into a function pointer array of the general segment code;
marking a sub-segment code called by the sub-segment codes as a sub-segment code required to be loaded into the memory; and
marking the sub-segment code as loaded.

In an embodiment of the present invention, the processing unit 1203 includes a second loading sub-unit 12032, configured to execute the following procedures:
determining whether there are any sub-segment codes required to be loaded into the memory;
determining whether the sub-segment codes have been loaded into the memory if there are sub-segment codes required to be loaded into the memory;
allocating a memory space for the sub-segment codes if the sub-segment codes are not loaded into memory;
triggering a virtual memory area functional function to release a memory occupied by sub-segment codes with a priority lower than that of the sub-segment codes if the memory space is insufficient;
determining whether any sub-segment codes are stored in the virtual memory area when allocating the memory space for the sub-segment codes successfully;
loading the sub-segment codes from the virtual memory area and clearing the sub-segment codes stored in the virtual memory area if the sub-segment codes are stored in the virtual memory area; loading the sub-segment codes from the functional segment if the sub-segment codes are not stored in the virtual memory area;
relocating the sub-segment codes into the memory;
adding a function hook into a function pointer array of the general segment code;
marking a sub-segment code called by the sub-segment codes as a sub-segment code required to be loaded into the memory; and
marking the sub-segment code as loaded.

In an embodiment of the present invention, the processing unit 1203 includes a first deleting sub-unit 12033, is configured to execute the following procedures:
determining whether there are any sub-segment codes required to be exported from the memory;
determining whether the sub-segment codes have been loaded into the memory if there are the sub-segment codes required to be exported from the memory;
clearing the memory space corresponding to the sub-segment codes if the sub-segment codes have been loaded into the memory;
deleting the address mapping table in the memory management unit;
deleting the corresponding function hook in the function pointer array of the general segment code; and
marking the sub-segment codes as deleted.

In an embodiment of the present invention, the processing unit 1203 includes a second deleting sub-unit 12034, is configured to execute the following procedures:
determining whether there are any sub-segment codes required to be exported from the memory;
determining whether the sub-segment codes have been loaded into the memory if there are the sub-segment codes required to be exported from the memory,;
clearing the memory space corresponding to the sub-segment codes if the sub-segment codes have been loaded into the memory;
deleting the corresponding function hook in the function pointer array of the general segment code; and
marking the sub-segment codes as deleted.

In an embodiment of the present invention, the processing unit 1203 further includes:
a clearing subunit 12035, configured to clear data of the virtual memory area when starting the system.
an exporting subunit 12036, configured to store sub-segment codes with a priority lower than a second threshold value into the virtual memory area and release a corresponding memory space under a condition of insufficient memory; clear the memory space and delete the address mapping table in the memory management unit or clear the memory space; delete the corresponding function hook in the function pointer array of the general segment code; mark usage information of the virtual memory area; and mark the sub-segment codes as exported; and
a third loading sub-unit 12037, configured to determine whether there are any sub-segment codes required to be loaded in the virtual memory area under a condition of sufficient memory; determine whether the sub-segment codes have been loaded into the memory if there are sub-segment codes required to be loaded; establish the address mapping table in the memory management unit and allocate the memory space and load the sub-segment codes into the memory if the sub-segment codes are not loaded into the memory, or allocate the memory space and load the sub-segment codes into the memory in a relocation manner; add the corresponding function hook into the function pointer array of the general segment code; clear the sub-segment codes in the virtual memory area and the usage information of the virtual memory area; and mark the sub-segment codes as loaded.

In a specific implementation, functions implemented by various units in the apparatus for starting and running the system, may be achieved by a Central Processing Unit (CPU), a Micro Processing Unit (MPU), a Digital Signal Processor (DSP) or a Field Programmable Gate Array (FPGA) and the like of the apparatus for starting and running the system.

The skilled in the art should understand that, the embodiment of the present invention can be provided as a method, a system or computer program products. Therefore, a form of hardware embodiment, a form of software embodiment or a form of embodiment combining software aspect and hardware aspect can be used in the present invention. Moreover, a form of computer program product executed on one or more computer available memory media (including but not limited to a disk memory and an optical memory and so on) which contain computer available program codes can be used in the present invention. Accordingly, an embodiment of the present invention further provides a computer storage medium in which the computer program is stored. The computer program is configured for implementing the method for starting and running the system in accordance with the embodiments of the present invention.

The present invention is described according to the flow diagrams and/or block diagrams of the method, device (system) and computer program product of the embodiments of the present invention. It should be understood that each flow and/or block in the flow diagrams and/or block diagrams and a combination of flow and/or block in the flow diagrams and/or block diagrams can be implemented by computer program instructions. These computer program instructions can be provided to a general-purpose computer, a special-purpose computer, an embedded processor or processors of other programmable data processing devices to generate a machine, so that the instructions executed by the computer or processors of other programmable data processing devices generate an apparatus used for implementing functions specified in one or more flows of the flow diagrams and/or in one or more blocks of the block diagrams.

These computer program instructions also can be stored in a computer readable memory which can guide the computer or other programmable data processing devices to work in a specific way, so that the instructions stored in the computer readable memory generate manufactures including an instruction apparatus, and the instruction apparatus implements functions specified in one or more flows of the flow diagrams and/or in one or more blocks of the block diagrams.

These computer program instructions also can be loaded to the computer or other programmable data processing devices, which causes a series of operation steps be executed on the computer or other programmable devices to generate processing implemented by the computer, thus, the instructions executed by the computer or other programmable devices provide the steps used for implementing functions specified in one or more flows of the flow diagrams and/or in one or more blocks of the block diagrams.

The embodiments described above are just preferred embodiments of the present invention and are not used for limiting the protection scope of the present invention.

### Industrial Applicability

According to the technical solution of the embodiment of the invention, the storage device is partitioned into a plurality of storage areas, and the system code is partitioned into a plurality of segment code codes, and a plurality of segment codes are stored into corresponding storage areas in the storage device; and the segment codes stored in the storage area of the storage device are copied to the memory for running when the system is started or run. By adopting the technical solution of the embodiment of the present invention, an operating system can be squeezed into a memory with smaller capacity and discontinuous addresses to run. In another aspect, the solution of the embodiment of the present invention can effectively utilize the memory space in the embedded chip to start and run the system, thereby saving the memory capacity and reducing the cost.

## Claims

1. A method for starting and running a system, comprising:
partitioning a storage device into a plurality of storage areas, and partitioning a system code into a plurality of segment codes;
storing the plurality of segment codes into corresponding storage areas in the storage device; and
copying the segment codes stored in the storage areas of the storage device to a memory for running when starting or running the system.

2. The method for starting and running a system according to claim 1, wherein partitioning the storage device into the plurality of storage areas and partitioning the system code into the plurality of segment codes comprises:
partitioning the storage device into following storage areas: a primary starting area, a general area, an abnormal interrupt processing area, a secondary starting area, a scheduling and running area, a high-speed running area and a functional area; and
partitioning the system code into following segment codes: a primary starting segment code, a general segment code, an abnormal interrupt processing segment code, a secondary starting segment code, a scheduling and running segment code, a high-speed running segment code and a functional segment code.

3. The method for starting and running a system according to claim 2, wherein partitioning the system code into the plurality of segment codes further comprises:
partitioning the functional segment code into a plurality of sub-segment codes according to functions, wherein each sub-segment code corresponds to a function.

4. The method for starting and running a system according to claim 3, wherein, the method further comprises:
setting corresponding priorities for various sub-segment codes according to a usage frequency and/or usage time index of the sub-segment codes.

5. The method for starting and running a system according to claim 3, wherein the sub-segment codes in the functional segment code satisfy at least one of the following:
using local variables in the sub-segment code;
storing a constant in the sub-segment codes, along with the sub-segment codes entering into and exiting from the memory;
no reference relationship between different sub-segment codes;
a total capacity of sub-segment codes determined by the reference relationship between the sub-segment codes being less than or equal to an idle memory capacity; and
addressing of reference functions between different sub-segment codes being indirectly addressed by means of a function pointer array hook, wherein the function pointer array hook is stored in the general segment code, and the pointer array hook is managed by the scheduling and running segment code.

6. The method for starting and running a system according to claim 3, wherein storing various segment codes and sub-segment codes in a page alignment manner when storing the plurality of segment codes to the corresponding storage areas in the storage device.

7. The method for starting and running a system according to claim 2, wherein copying the segment codes stored in the storage areas of the storage device to the memory for running when starting the system, comprises:
copying the primary starting segment code into a built-in memory;
running the primary starting segment code, initializing an external memory, and copying the secondary starting segment code into the external memory;
running the secondary starting segment code, and copying following segment codes into the built-in memory respectively: the general segment code, the abnormal interrupt processing segment code, the scheduling and running segment code, and the high-speed running segment code; and
running the general segment code to initialize the system and completing starting of the system.

8. The method for starting and running a system according to claim 7, wherein copying the segment codes stored in the storage areas of the storage device to a memory for running when running the system, comprises:
after starting the system, running the scheduling and running segment code, according to a predetermined strategy, scheduling the sub-segment code in the functional segment code to the memory for running.

9. The method for starting and running a system according to claim 3, wherein the method further comprises:
loading sub-segment codes with a priority higher than a first threshold value into the memory when starting the system, and
loading sub-segment codes to be called into the memory when running the system.

10. The method for starting and running a system according to claim 8, wherein scheduling the sub-segment codes in the functional segment codes to the memory according to the predetermined strategy, comprises:
determining whether there are any sub-segment codes required to be loaded into the memory;
determining whether the sub-segment codes have been loaded into the memory if there are sub-segment codes required to be loaded into the memory;
allocating a memory space for the sub-segment codes if the sub-segment codes are not loaded into memory;
triggering a virtual memory area functional function to release a memory occupied by sub-segment codes with a priority lower than that of the sub-segment codes if the memory space is insufficient;
establishing an address mapping table in a memory management unit when allocating the memory space successfully for the sub-segment codes;
determining whether any sub-segment codes are stored in the virtual memory area;
loading the sub-segment codes from the virtual memory area and clearing the sub-segment codes stored in the virtual memory area if the sub-segment codes are stored in the virtual memory area, loading the sub-segment codes from the functional segment if the sub-segment codes are not stored in the virtual memory area;
adding a function hook into a function pointer array of the general segment code;
marking a sub-segment code called by the sub-segment codes as a sub-segment code required to be loaded into the memory; and
marking the sub-segment code as loaded.

11. The method for starting and running a system according to claim 8, wherein scheduling the sub-segment codes in the functional segment code to the memory according to the predetermined strategy, comprises:
determining whether there are any sub-segment codes required to be loaded into the memory;
determining whether the sub-segment codes have been loaded into the memory if there are sub-segment codes required to be loaded into the memory;
allocating a memory space for the sub-segment codes if the sub-segment codes have not been loaded into the memory;
triggering a virtual memory area functional function to release a memory occupied by sub-segment codes with a priority lower than that of the sub-segment codes if the memory space is insufficient;
determining whether any sub-segment codes are stored in the virtual memory area when allocating the memory space for the sub-segment codes successfully;
loading the sub-segment code from the virtual memory area and clearing the sub-segment code stored in the virtual memory area if the sub-segment codes are stored in the virtual memory area; loading the sub-segment codes from the functional segments if the sub-segment codes are not stored in the virtual memory area;
relocating the sub-segment codes to the memory;
adding a function hook into a function pointer array of the general segment codes;
marking a sub-segment code called by the sub-segment codes as a sub-segment code required to be loaded into the memory; and
marking the sub-segment code as loaded.

12. The method for starting and running a system according to claim 10, wherein the method further comprises:
determining whether there are any sub-segment codes required to be exported from the memory;
determining whether the sub-segment codes have been loaded into the memory if there are sub-segment codes required to be exported from the memory;
clearing the memory space corresponding to the sub-segment codes if the sub-segment codes have been loaded into the memory;
deleting the address mapping table in the memory management unit;
deleting the corresponding function hook in the function pointer array of the general segment code; and
marking the sub-segment codes as deleted.

13. The method for starting and running a system according to claim 11, wherein the method further comprises:
determining whether there are any sub-segment codes required to be exported from the memory;
determining whether the sub-segment code have been loaded into the memory if there are sub-segment codes required to be exported from the memory;
clearing the memory space corresponding to the sub-segment codes if the sub-segment codes have been loaded into the memory;
deleting the corresponding function hook in the function pointer array of the general segment code; and
marking the sub-segment codes as deleted.

14. The method for starting and running a system according to claim 10 or 12, wherein the method further comprises:
clearing data in the virtual memory area when starting the system;
storing sub-segment codes with a priority lower than a second threshold value into the virtual memory area and releasing a corresponding memory space under a condition of insufficient memory; clearing the memory space and deleting the address mapping table in the memory management unit or clearing the memory space; deleting the corresponding function hook in the function pointer array of the general segment code; marking usage information of the virtual memory area; and marking the sub-segment codes as exported; and
determining whether there are any sub-segment codes in the virtual memory area required to be loaded under a condition of sufficient memory; if there are some sub-segment codes required to be loaded, determining whether the sub-segment codes have been loaded into the memory; if the sub-segment codes are not loaded into the memory, establishing the address mapping table in the memory management unit and allocating the memory space and loading the sub-segment codes into the memory, or allocating the memory space and loading the sub-segment codes into the memory by a relocation manner; adding the corresponding function hook into the function pointer array of the general segment code; clearing the sub-segment codes in the virtual memory area and the usage information of the virtual memory area; and marking the sub-segment codes as loaded.

15. An apparatus for starting and running a system, comprising:
a partitioning unit, configured to partition a storage device into a plurality of storage areas and partition a system code into a plurality of segment codes;
a storage unit, configured to store the plurality of segment codes into corresponding storage areas in the storage device; and
a processing unit, configured to copy the segment codes stored in the storage areas of the storage device to a memory for running when starting or running the system.

16. The apparatus for starting and running a system according to claim 15, wherein the partitioning unit is further configured to partition the storage device into following storage areas:
primary starting area, a general area, an abnormal interrupt processing area, a secondary starting area, a scheduling and running area, a high-speed running area and a functional area; and
partition the system code into following segments: a primary starting segment code, a general segment code, an abnormal interrupt processing segment code, a secondary starting segment code, a scheduling and running segment code, a high-speed running segment code and a functional segment code.

17. The apparatus for starting and running a system according to claim 16, wherein the partitioning unit is further configured to partition the functional segment code into a plurality of sub-segment codes according to functions, wherein each sub-segment code corresponds to a function.

18. The apparatus for starting and running a system according to claim 17, wherein, the apparatus further comprises:
a setting unit, configured to set corresponding priorities for various sub-segment codes according to a usage frequency and/or usage time index of the sub-segment codes.

19. The apparatus for starting and running a system according to claim 17, wherein the sub-segment codes in the functional segment code satisfy at least one of the following:
using local variables in the sub-segment codes;
storing a constant in the sub-segment codes, along with the sub-segment codes entering into and exiting from the memory;
no reference relationship between different sub-segment codes;
a total capacity of sub-segment codes determined by the reference relationship between the sub-segment codes being less than or equal to an idle memory capacity; and
addressing of reference functions between different sub-segment codes being indirectly addressed by means of a function pointer array hook, wherein the function pointer array hook is stored in the general segment code, and the pointer array hook is managed by the scheduling and running segment code.

20. The apparatus for starting and running a system according to claim 17, wherein when storing the plurality of segment codes to corresponding storage areas in the storage device, storing various segment code and sub-segment code in a page alignment manner.

21. The apparatus for starting and running a system according to claim 16, wherein the processing unit is further configured to copy the primary starting segment code into a built-in memory; run the primary starting segment code, initialize an external memory, and copy the secondary starting segment code into the external memory; run the secondary starting segment code, copy following segment codes into the built-in memory respectively: the general segment code, the abnormal interrupt processing segment code, the scheduling and running segment code, and the high-speed running segment code; and run the general segment code to initialize the system and complete starting of the system.

22. The apparatus for starting and running a system according to claim 21, wherein the processing unit is further configured to run the scheduling and running segment code after starting the system, and schedule the sub-segment codes in the functional segment code to run in the memory according to a predetermined strategy.

23. The apparatus for starting and running a system according to claim 17, wherein the processing unit is further configured to load sub-segment codes with a priority higher than a first threshold value into the memory when starting the system; and load sub-segment codes to be called into the memory when running the system.

24. The apparatus for starting and running a system according to claim 22, wherein the processing unit comprises a first loading sub-unit, configured to execute following procedures:
determining whether there are any sub-segment codes required to be loaded into the memory;
determining whether the sub-segment codes have been loaded into the memory if there are sub-segment codes required to be loaded into the memory;
allocating a memory space for the sub-segment codes if the sub-segment codes have not been loaded into memory;
triggering a virtual memory area functional function to release a memory occupied by sub-segment codes with a priority lower than that of the sub-segment codes if the memory space is insufficient;
establishing an address mapping table in a memory management unit when allocating the memory space for the sub-segment codes successfully;
determining whether any sub-segment codes are stored in the virtual memory area;
loading the sub-segment codes from the virtual memory area and clearing the sub-segment code stored in the virtual memory area if the sub-segment codes are stored in the virtual memory area; loading the sub-segment codes from the functional segment if the sub-segment codes are not stored in the virtual memory area;
adding a function hook into a function pointer array of the general segment code;
marking a sub-segment code called by the sub-segment codes as a sub-segment code required to be loaded into the memory; and
marking the sub-segment code as loaded.

25. The apparatus for starting and running a system according to claim 22, wherein the processing unit comprises a second loading sub-unit, configured to execute following procedures:
determining whether there are any sub-segment codes required to be loaded into the memory;
determining whether the sub-segment codes have been loaded into the memory if there are sub-segment codes required to be loaded into the memory;
allocating a memory space for the sub-segment codes if the sub-segment codes are not loaded into memory;
triggering a virtual memory area functional function to release a memory occupied by sub-segment codes with a priority lower than that of the sub-segment codes if the memory space is insufficient;
determining whether any sub-segment codes are stored in the virtual memory area when allocating the memory space for the sub-segment codes successfully;
loading the sub-segment codes from the virtual memory area and clearing the sub-segment codes stored in the virtual memory area if the sub-segment codes are stored in the virtual memory area; loading the sub-segment codes from the functional segment if the sub-segment codes are not stored in the virtual memory area;
relocating the sub-segment codes into the memory;
adding a function hook into a function pointer array of the general segment code;
marking a sub-segment code called by the sub-segment codes as a sub-segment code required to be loaded into the memory; and
marking the sub-segment code as loaded.

26. The apparatus for starting and running a system according to claim 24, wherein the processing unit comprises a first deleting sub-unit, configured to execute following procedures:
determining whether there are any sub-segment codes required to be exported from the memory;
determining whether the sub-segment codes have been loaded into the memory if there are the sub-segment codes required to be exported from the memory;
clearing the memory space corresponding to the sub-segment codes if the sub-segment codes have been loaded into the memory;
deleting the address mapping table in the memory management unit;
deleting the corresponding function hook in the function pointer array of the general segment code; and
marking the sub-segment codes as deleted.

27. The apparatus for starting and running a system according to claim 25, wherein the processing unit comprises a second deleting sub-unit, configured to execute following procedures:
determining whether there are any sub-segment codes required to be exported from the memory;
determining whether the sub-segment codes have been loaded into the memory if there are the sub-segment codes required to be exported from the memory,;
clearing the memory space corresponding to the sub-segment codes if the sub-segment codes have been loaded into the memory;
deleting the corresponding function hook in the function pointer array of the general segment code; and
marking the sub-segment codes as deleted.

28. The apparatus for starting and running a system according to claim 24 or 26, wherein the apparatus further comprises:
a clearing sub-unit, configured to clear data of the virtual memory area when starting the system;
an exporting sub-unit, configured to store sub-segment codes with a priority lower than a second threshold value into the virtual memory area and release a corresponding memory space under a condition of insufficient memory; clear the memory space and delete the address mapping table in the memory management unit or clear the memory space; delete the corresponding function hook in the function pointer array of the general segment code; mark usage information of the virtual memory area; and mark the sub-segment codes as exported; and
a third loading sub-unit, configured to determine whether there are any sub-segment codes required to be loaded in the virtual memory area under a condition of sufficient memory; determine whether the sub-segment codes have been loaded into the memory if there are sub-segment codes required to be loaded; establish the address mapping table in the memory management unit and allocate the memory space and load the sub-segment codes into the memory if the sub-segment codes are not loaded into the memory, or allocate the memory space and load the sub-segment codes into the memory in a relocation manner; add the corresponding function hook into the function pointer array of the general segment code; clear the sub-segment codes in the virtual memory area and the usage information of the virtual memory area; and mark the sub-segment codes as loaded.

29. A computer storage medium storing computer executable instructions which are configured to execute the method for starting and running a system according to any one of claims 1-14.
